# EUROPEAN PATENT APPLICATION

(11) **EP 4 391 709 A1**
(43) Date of publication of application: **26.06.2024**
(21) Application number: 22214673.0
(22) Date of filing: 19.12.2022
(51) Int. Cl.: H04W 84/00, H04W 84/06, H04W 88/08

(54) **A RADIO COMMUNICATION APPARATUS FOR PROVIDING A LOCALLY DEFINED CAMPUS NETWORK FOR AN INDUSTRIAL ENVIRONMENT**

(71) Applicant: Siemens Aktiengesellschaft, 80333 München (DE)
(72) Inventor: Richerzhagen, Björn, 85055 Ingolstadt (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The proposed embodiments relate to a radio communication apparatus for providing a locally defined campus network for an industrial environment. The radio communication apparatus may comprise one or more mobile entities including at least one radio unit for operating a radio frontend maintaining the campus network.

## Description

### TECHNICAL FIELD

The disclosed embodiments generally relate to the field of industrial networks. Specifically, the disclosed embodiments relate to a radio communication apparatus for providing a locally defined campus network for an industrial environment.

### BACKGROUND

Industrial campus networks may be operated on one or more geographically constrained sites participating in one or more private networks of an industrial site such as factory premises, harbors, airports, or energy plants.

Access to a campus network is commonly restricted to humans and devices affiliated with this campus network and operating in one or more of the sites defining the campus. An industrial campus network, in other words, exclusively provides resources to its members for the purposes of mobile communication and/or exchanging data, whereby this exclusivity does not mean that the industrial campus network would be hidden or isolated from third-party and/or public communication networks which may be operated in parallel at the site. A visible coexistence of an industrial campus network - albeit not automatically accessible - with further communication networks means that the campus network is likewise subject to local regulations for the operation of a communication system.

Today's campus networks are built up by integrating infrastructure premises into an on-site industrial site. Accordingly, campus networks heavily rely on a static set up of infrastructure on the campus site. This static infrastructure significantly reduces a flexibility in transferring existing or similar infrastructure concepts to other, possibly more dynamic scenarios, which would be particularly beneficial for industrial applications.

### SUMMARY AND DESCRIPTION

According to an aspect of the embodiments, a radio communication apparatus is provided which is capable of providing a higher flexibility in applying already applied or similar infrastructure concepts to other, more dynamic scenarios.

According to an aspect of the present invention, a radio communication apparatus for providing a locally defined campus network for an industrial environment is suggested, the radio communication apparatus comprising one or more mobile entities including at least one radio unit for operating a radio frontend maintaining the campus network.

### BRIEF DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: illustrates a radio communication system according to a first embodiment;
- FIG. 2:: illustrates a radio communication system according to a second embodiment;
- FIG. 3:: illustrates a radio communication system according to a third embodiment;
- FIG. 4:: illustrates a radio communication system according to a fourth embodiment;
- FIG. 5:: illustrates a radio communication system according to a fifth embodiment;
- FIG. 6:: illustrates a radio communication system according to a sixth embodiment; and;
- FIG. 7:: illustrates a radio communication system according to a seventh embodiment.

### DETAILED DESCRIPTION

Campus networks may be a preferred choice for present high-performance 5G mobile networks dedicated to industrial applications and will retain this rank for future generations of mobile networks, e.g. 6G. Operation of a campus network may be established by licensing a private 5G campus network frequency for one or more desired locations, integrating own 5G infrastructure into the on-site industrial network, such that all nodes (e.g., AGVs, productions machines, users with mobile devices) have a transparent access to the non-public private campus network using wired, wireless and/or mobile connections.

The presently dedicated infrastructure, i.e. designed for a particular on-site industrial network, is so far static in that it significantly reduces a flexibility in transferring the dedicated concept to other, more dynamic scenarios, which may be more beneficial for industrial applications.

The present embodiments mitigate these and other limitations by extending the concept of mobility from the side of a mobile user equipment - in mobile networks commonly referred to as UE - to parts of the campus network infrastructure itself.

This extension of mobility may include the infrastructure to be mobile or moving during operation of the network.

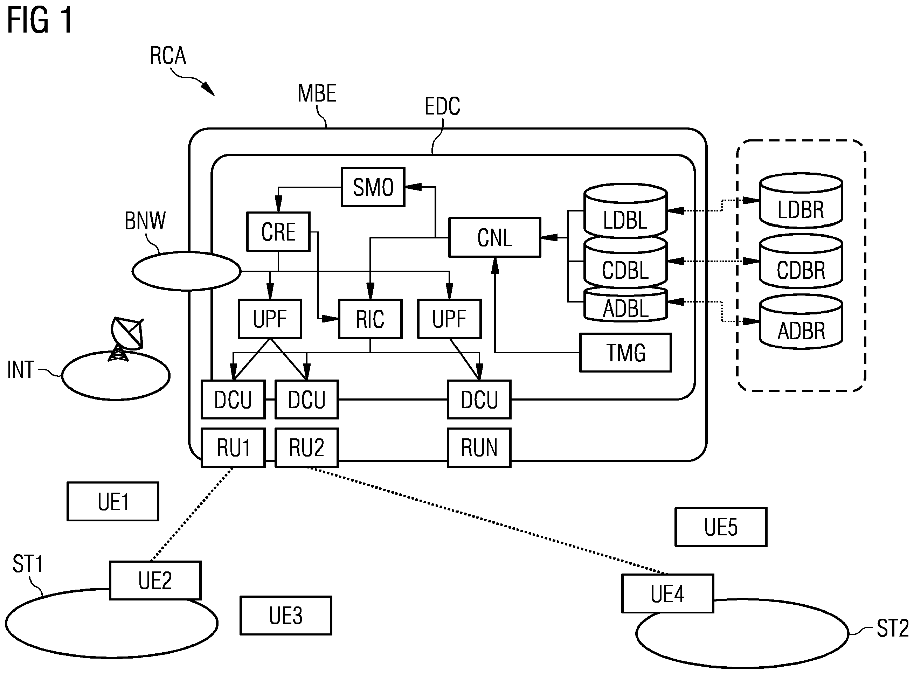

FIG. 1 shows a schematic architectural diagram of an example next-generation communications system according to an embodiment of the present invention. A radio communication apparatus RCA for establishing at least one locally defined campus network comprises:
- a mobile entity MBE including one or more, here: three radio units RU1, RU2, RUN for operating a radio frontend maintaining the campus network;
- a plurality of network function nodes CNL, TMG, SMO, RIC, UPF, CRE assigned to a shared infrastructure edge cloud EDC, the mobile entity MBE at least partially contributing computational resources for at least one of said plurality of network function nodes CNL, TMG, SMO, RIC, UPF, CRE;
- the plurality of network function nodes CNL, TMG, SMO, RIC, UPF, CRE including a trajectory node TMG for collecting and tracking trajectory data of the mobile entity MBE and a localizer node CNL for using the trajectory data for identifying locations to be covered by the locally defined campus network.

For reasons of clarity, the radio communication apparatus RCA according to the various embodiments described herein is - pars pro toto - sometimes referred to as a mobile entity MBE as the mobile entity MBE may be the main bearer or, alternatively, the actual device making up the radio communication apparatus RCA according to the embodiments.

As shown in the drawing, the locally defined campus network may include one or more networks or network segments - each respectively represented by an elliptical outline - being related to a first industrial site ST1 and a second industrial site ST2. These networks participating in or related to the locally defined campus network may be locally separated or, alternatively, co-located or combined. In the latter case where the locally defined campus networks participating in the locally defined campus network may be co-located or combined, the networks may be organized as a subnet or a network segment within the locally defined campus network.

The first industrial site ST1 and the second industrial site ST2 may be organized in a way that their geographical location corresponds to spatial distribution of an industrial complex such as distributed factory premises including an office building and a more distant logistics center. Increasing flexibility in the spatial distribution of an industrial complex may mean that ownership of industrial buildings or real estate becomes mandatory or even represents a hurdle in the case of frequent relocations of operations. As soon as current efforts bear fruit to make the operating resources of a company so flexible that conversion of industrial operations is readily possible, further development will also demand that the location of industrial sites may or must be relocated depending on economic or operational needs. The embodiments strive to anticipate these future developments and offer solutions for such flexibility with respect to the campus network used for data exchange for the industrial operation, office operation and/or for communication. All mobile or wired devices, nodes, servers or clients possibly involved in this data exchange are hereinafter referred to as user equipment UE1,...,UE5 in accordance to the nomenclature of the Universal Mobile Telecommunications System (UMTS) and the 3GPP Long Term Evolution (LTE).

It should be noted that in the example in FIG. 1, only the second and the second and the fourth user equipment UE2, UE4 participate in the campus network, while the first, third and fifth user equipment UE1, UE3, UE5 is currently or permanently not participating in the network. While the second and the fourth user equipment UE2, UE4 are located in the first industrial site ST1 and the locally separated second industrial site ST2, respectively, both user equipment UE2, UE4 are participating in the same campus network. As mentioned above, both ellipsoidal networks associated with the first industrial site ST1 and the second industrial site ST2, respectively, participate in the campus network according to the embodiment as shown in FIG. 1.

The network function nodes CNL, TMG, SMO, RIC, UPF, CRE in the mobile entity MBE of the radio communication apparatus RCA may, more specially include a localizer node CNL, a trajectory node TMG, a service management and orchestration node SMO, a radio access network (RAN) intelligent controller RIC, a user plane function node UPF and a core function node as explained further down below. One or more of said network function nodes CNL, TMG, SMO, RIC, UPF, CRE may be connected by an infrastructure edge cloud EDC for connecting network functions, network function nodes and/or for hosting computational applications in general.

The trajectory node TMG may include a functionality for tracking and/or following a trajectory of the mobile entity MBE and, optionally, for managing and/or controlling a navigation of the mobile entity MBE. Tracking the trajectory may include monitoring a geographical position, a course, an acceleration and/or a velocity of the mobile entity MBE. The trajectory node TMG may report trajectory data to the localizer node CNL as explained further down below. Managing and/or controlling the navigation of the mobile entity MBE may include obtaining a target location, a destination, or a specified trajectory for reaching the destination. The trajectory node TMG may include means or interfaces to control the course and/or velocity of the mobile entity MBE in order to reach the destination.

The localizer node CNL or campus network localizer node CNL supports an identification of campus networks to be served by the radio communication apparatus RCA. Based on trajectory data received from the trajectory node TMG, the localizer node CNL may use a database to retrieve campus networks en route and to match data of the retrieved campus networks with the campus networks detected by the localizer node CNL. Said database may include an onboard or local database LDBL assigned to the mobile entity MBE and a remote database LDBR, which may be external to the mobile entity MBE, including a location on a third - not shown - mobile entity, or a fixed location which may be visited by the mobile entity at specifiable occasions or in specifiable time intervals such as a home base of the mobile entity MBE. Both databases, the onboard database LDBL and the remote database LDBR may be synchronized with one another upon demand or at adjustable time intervals.

The localizer node CNL may be arranged to consider system specific characteristics of the mobile entity MBE. In an exemplary embodiment of the mobile entity MBE as a satellite, the localizer node CNL may be arranged to provide one or more spot beams and/or at least one communication service over at least one fixed-location spot beam. In a case where the mobile entity MBE is embodied as an AGV or automated guided vehicle equipped with several locally separated antennas, the localizer node CNL may be arranged to cover different sectors by different antennas.

The localizer node CNL may interact with the service management and orchestration node SMO for exchanging configuration data and/or data related to authentication, authorization, or accounting - also referred to as AAA data.

The localizer node CNL may send required configuration artifacts related to connectivity to the radio access network (RAN) intelligent controller RIC. As used herein, configuration artifacts may refer to a set of configuration parameters representing a result of a work process and/or resulting from a definition of requirements. Alternatively, as described below, the localizer node CNL may send required configuration artifacts related to connectivity directly to a distributed controller unit DCU and/or to one or more of the radio units RU1,RU2, RUN. The distributed controller unit DCU may include one or more - not shown - distributed units - in fifth-generation technology standard for broadband cellular networks or short 5G also referred to as DU - and/or one or more - not shown - centralized units - in 5G also referred to as CU. The distributed controller unit DCU may comprise any functional diversity of distributed or central units providing northbound support - in an upward direction in the drawing - for the higher layers of the protocol stack - e.g. handled by the user plane function node UPF - while providing southbound support - i.e. in an downward direction in the drawing - for the lower layers of the protocol stack - e.g. handled by the user plane function node UPF.

The localizer node CNL may assume responsibility for configuring connectivity patterns at corresponding user plane function nodes UPF. The connectivity patterns may affect virtual network functions, overlays, QoS definitions etc. The localizer node CNL may create schedules for handing over currently operating campus networks from the current mobile entity MBE to other one or more mobile entities. This may be the case, for example, when the radio-supported industrial sites ST1,ST2 are no longer to be supplied by just one mobile entity MBE, but rather by several mobile entities. Another use case may require a handover on the infrastructure side to be scheduled, thereby handing over from the mobile entity MBE presently providing radio coverage to another mobile entity. Further on, interconnectivity between campus networks hosted on different mobile entities may be controlled and configured by the localizer node CNL, as will be explained in more detail with respect to embodiments illustrated further down below.

A set of databases may support the localizer node CNL in its operation, among these are the already mentioned authorized campus network locations database LDBL locally provided at the mobile entity MBE being in a connection with the master authorized campus network locations database LDBR. Both databases LDBL, LDBR contribute to a distributed database for storing campus network identifiers along with their locations. The distributed database and/or the databases LDBL, LDBR may further include a signature of a regulatory body having approved or registered the present campus network.

While the authorized campus network locations database LDBL may usually be located onboard the mobile entity MBE, its master database LDBR may be maintained in a remotely accessible location for regular synchronization. The distributed database and/or the databases LDBL, LDBR may further maintain data about allowed frequency ranges and/or permitted transmission power. Further on, related regulatory parameters may be stored in the distributed database and/or the databases LDBL, LDBR and utilized by the mobile entity MBE as described.

A further pair of databases may support the localizer node CNL in its operation, namely a local campus network configuration database CDBL locally provided at the mobile entity MBE being in connection with a remote campus network configuration database CDBR, the latter remote database CDBR being a master of the local database CDBL. Since each campus network may have a specific set of configuration artifacts required for deployment, commissioning, start-up, and operation, these configuration artefacts may be advantageously stored in a master database CDBR, said master database CDBR being able to provide local copies of the relevant campus network configurations to a local database CDBL, said local database making the configurations available to the localizer node CNL.

A further pair of databases - or, alternatively, active components supporting and exchanging data - may support the localizer node CNL in its AAA (authentication, authorization, and/or accounting) operations, namely a local database ADBL locally provided at the mobile entity MBE being in connection with a remote AAA database ADBR, the latter remote database ADBR being a master of the local database ADBL. Since campus networks may be integrated within wireless and/or wired local area networks - e.g., company or enterprise networks, also referred to as information technology or IT networks, or industrial operational technology networks also referred to as OT networks - a joint AAA entity - not shown - may be made available in the network or in the campus network, respectively, so that devices connected via the campus network and delivering correct credentials are authenticated to participate in the corresponding IT network or OT network. As mobile entities may require a distributed implementation approach for managing their data, this joint AAA entity may be represented by the local database ADBL onboard the mobile entity synchronized with remote AAA database ADBR being the AAA master component or AAA server.

In FIG. 1 and in the following figures, sites ST1, ST2 represent different locations where campus network may be deployed.

The mobile entity may provide an interface to a backbone network BNW. This optional interface BNW may allow an extension of a communication range of the mobile entity MBE by connecting the mobile entity MBE with other mobile entities or with a broadband network INT. An example could be a network of direct point-to-point links in-between satellites, or an optical transmission link to a ground station depicted in FIG. 1 near the ellipse symbolizing the broadband network INT.

In the following section, mobile radio network components involved in the communication are described. Although designations of components as described hereinafter may be aligned to the terminology of 5G networks as used in 3GPP (3rd Generation Partnership Project) terminology in order to point to their main functionalities, such designations should not be construed as constitutive but as examples. Furthermore, the embodiments are not limited to fifth generation or 5G radio networks or protocols in any way.

User equipment UE1,...,UE5 or terminals UE1,...,UE5 generally represent devices being connected - or, at least, being able to be connected - to the campus network through their - not shown - radio interface. Terminals UE1,...,UE5 may also act as router/bridge to other - not shown - local network segments. Terminal devices UE1,...,UE5, accordingly, may be embodied as immobile or mobile devices, e.g., handhelds, mobile robots, AGVs, UAVs. Terminals UE1,...,UE5 may also be utilized to extend a wireless coverage, e.g. acting as a relay or gateway located on a rooftop of an industrial building in order to provide radio coverage inside a factory hall.

The service management and orchestration node SMO is a main management component of the campus network and interacts with the localizer node CNL. The service management and orchestration node SMO may receive validated and authorized configuration artefacts of the campus networks that need to be deployed and operated at the present location of the mobile entity.

As soon as the mobile entity MBE is leaving an area where a certain campus network is authorized for operations, the service management and orchestration node SMO may be notified to cease or shut down operations related to that specific campus network. To this end, the service management and orchestration node SMO may utilize application program interfaces or APIs provided by a core function node CRE for reconfiguration.

The core function node CRE, which may be also referred to as 5G core, consists of a number of virtualized network functions. Depending on the deployment, only a subset of 3GPP-defined core functions needs to run locally on the mobile entity MBE. For example only an access and mobility management function or AMF - not shown - and a session management function or SMF for managing the ser equipment UE1,...,UE5 and the user plane function node UPF may run by the core function node CRE, while other core functions may be hosted on alternative locations outside the infrastructure edge cloud EDC or even outside the radio communication apparatus RCA.

The user plane function node UPF, as defined by 3GPP, terminates a 3GPP connection with a terminal UE1,...,UE5 and has the capability of forwarding traffic into a data network or to local processing capabilities. In addition to the 3GPP-specified functionality, the user plane function node UPF according to the embodiments may be utilized as an additional gatekeeper to allow conditional access into a specific data network, e.g., a private network, based on locally available information. This locally available information may include locations of one or more terminals UE1,...,UE5 and/or locations of local authorized campus network, the latter locations being able to be queried from the local authorized campus network locations database LDBL.

The RAN intelligent controller RIC provides mechanisms and interfaces to configure and control of radio-related parts of the radio communication apparatus RCA, e.g., one or more radio units RU1, RU2, RUN and/or one or more of the distributed controller units DCU including one or more distributed units or DU and/or centralized units CU included in one or more distributed controller units DCU. The configuration and control of the radio-related parts of the radio communication apparatus RCA includes management of scheduling policies for the air interface or configuration of cells/beams on the utilized air interface.

While a RIC architecture as proposed by an O-RAN Alliance - a community of mobile operators, vendors, research, and academic institutions with the aim of designing radio access networks to be more intelligent, open, virtualized and fully interoperable - could be utilized for this task, the RAN intelligent controller RIC according to the embodiments may also be made to be more integrated and customized to specific needs. Such specific embodiments of the RAN intelligent controller RIC may, for example, include dedicated interfaces with a specific implementation of distributed units or DU and/or centralized units CU included in one or more of the distributed controller units DCU as shown in FIG. 1. Alternatively or additionally, the functionality of the RAN intelligent controller RIC may also be directly integrated into the service management and orchestration node SMO.

The distributed controller unit DCU refers to a unit which may either operated as a central unit or CU, or a distributed unit or DU or cooperation of both. A distributed controller unit DCU may, in general, refer to a centralized logical node within a wireless network infrastructure. A central unit or CU and a distributed unit DU as defined by 3GPP contain a wireless protocol stack including a control plane and a user plane. Configuration capabilities of the distributed controller unit DCU are exposed via the RAN intelligent controller RIC by utilizing, e.g., the O-RAN interfaces or directly transmitted to the service management and orchestration node SMO using a customized implementation transmission alternative.

One or more radio units RU1, RU2, RUN form a radio frontend realizing the lower physical layer functionality as defined in 3GPP and based on the split option and level of integration/disaggregation of the 5G system at hand.

The embodiments neither require nor impose a specific split option or architecture. The embodiments merely assume that relevant parameters of the radio characteristics - e.g., beam characteristics, directionality, etc. - may be configured or at least retrieved - as described above for the distributed controller unit DCU - in order to be utilized in decision making and configuration processes in the RAN intelligent controller RIC or the service management and orchestration node SMO.

As used herein the terms 5G and New Radio (NR) refer without limitation to apparatus, methods or systems compliant with 3GPP Release 15, and any modifications, subsequent Releases, or amendments or supplements thereto which are directed to New Radio technology, whether licensed or unlicensed.

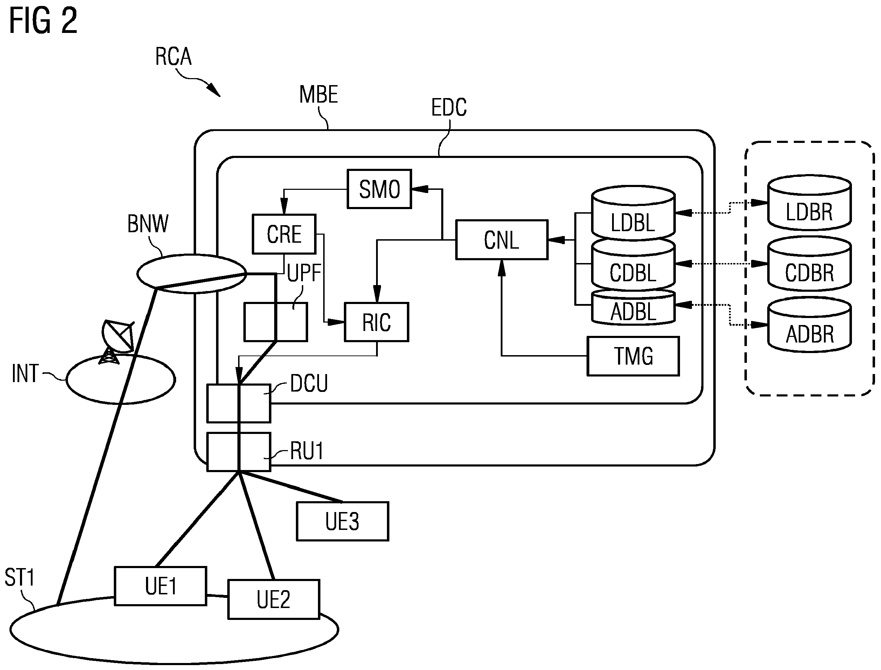

FIG. 2 illustrates an operation of a radio communication apparatus RCA according to an alternative embodiment in a radio communication system which may be referred to as a single-site topology.

According to the single-site topology or single-site scenario as depicted in FIG. 2, one industrial site ST1 may be served by one campus network hosted by one mobile entity MBE. Connectivity between terminal UE1,...,UE5, optionally an involvement of one or more wireless networks - graphically represented by an ellipse at the industrial site ST1 - may be realized through the user plane function node UPF hosted onboard the mobile entity MBE. The terminals UE1,...,UE3 may be embodied as automated guided vehicles or AGV or as unmanned aerial vehicle or UAV. One of the terminals UE1 may additionally act as the mobile entity MBE, serving other terminals UE2,...,UE5 or other wireless industrial devices not shown in FIG. 2.

Bold lines in the drawing symbolize a possible communication route via a communication link between the local wireless network of the industrial site ST1 and the broadband network INT, leading via the interface to the backbone network BNW to the mobile entity MBE, which connects via its user plane function node UPF, the distributed controller unit DCU and the radio unit RU1 with the terminals UE1,...,UE3.

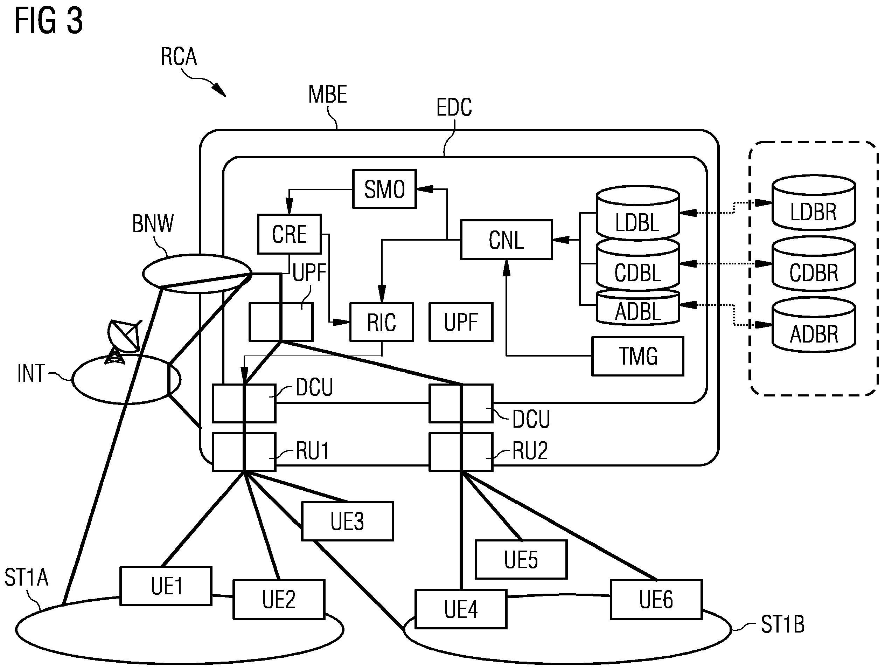

FIG. 3 illustrates an operation of a radio communication apparatus RCA according to an alternative embodiment in a radio communication system which may be referred to as a multi-site topology. According to the multi-site topology or multi-site scenario as depicted in FIG. 3, two or more industrial sites ST11A, ST1B may be served by one campus network hosted by one mobile entity MBE.

The two or more industrial sites ST11A, ST1B may be locally separated and interconnected by the mobile entity MBE. Both industrial networks assigned to the industrial sites ST11A, ST1B and all user equipment or terminals UE1,...,UE6 may be connected, or in other words, may be reachable within the same network. It will be appreciated that the basic embodiment as shown in FIG 2 may be modified by a multiplicity of possible alternative embodiments such as using multiple radio units RU1 or interconnecting via one or more user plane function nodes UPF.

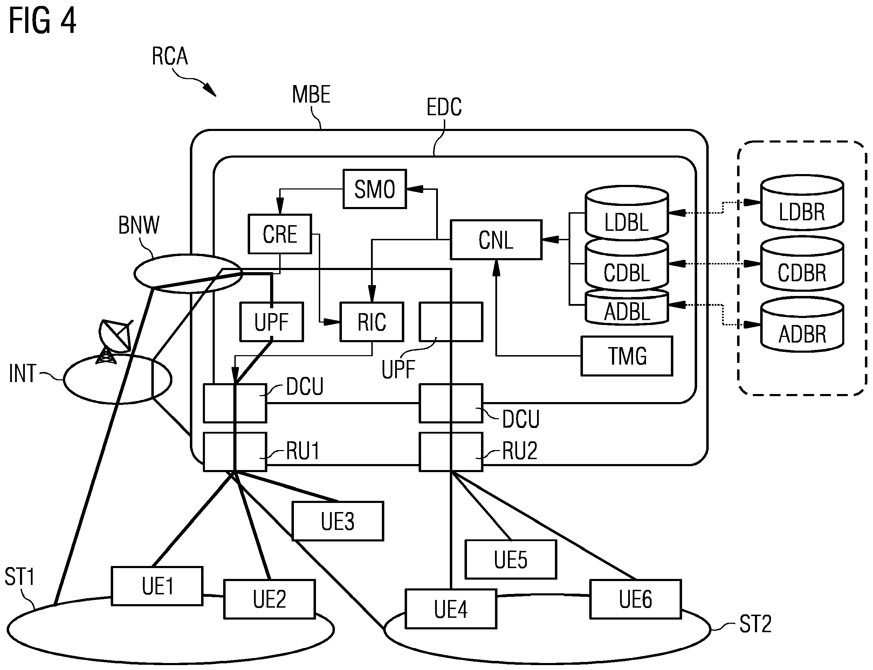

FIG. 4 illustrates an operation of a radio communication apparatus RCA according to an alternative embodiment in a radio communication system which may be referred to as a multi-single-site topology.

According to the multi-single-site topology or multi-single-site scenario as depicted in FIG. 4, two or more industrial sites ST11A, ST1B may be served by two or more different campus networks hosted by one mobile entity MBE. The multi-single-site configuration according to FIG. 4 could be understood that the scenarios according to FIG. 2 and FIG. 3 are hosted for two or more different sites ST1, ST2, each site ST1, ST2 being supplied by a different campus network.

The multi-single-site topology according to this embodiment as depicted in FIG. 4 may allow an operation of different campus networks either at different locations or at similar locations on different radio frequencies, without interferences between each other. Different campus networks may be usually isolated, which may mean that users in one campus network do not interfere with users of other campus networks.

Multi-multi-site topologies - not shown - in turn allow simultaneous operations of different multi-site setups on one single mobile entity MBE. As described for the multi-single-site topology according to FIG. 4, campus networks are isolated also in the multi-multi-site topology and do not interfere with each other. It will be appreciated that the basic embodiment as shown in FIG 4 may be modified by a multiplicity of possible alternative embodiments such as using one, more or multiple radio units RU1 or interconnecting via one or more user plane function nodes UPF.

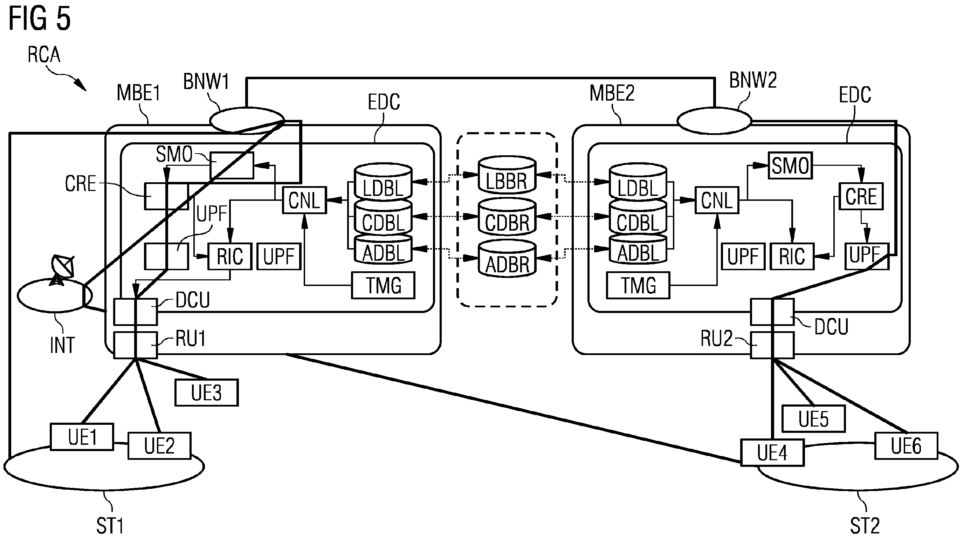

The exemplary embodiments described above with reference to FIG. 1 to FIG. 4 may be extended over more or multiple mobile entities MBE1, MBE2, creating either multi-hop multi-site scenarios, or, multi-hop single-site scenarios as shown in FIG. 5, or a mix of both.

In FIG. 5 a multi-hop single-site scenarios is shown wherein the radio communication apparatus RCA includes at least two connected mobile entities MBE1,MBE2. A connection between the first mobile entity MBE1 and the second mobile entity MBE2 may be established via the backbone network BNW. The campus networks on the industrial sites ST1, ST2 are configured using configuration data created by the one or more localizer nodes CNL.

In addition to the topology variants shown above, further embodiments of the radio communication apparatus RCA may be advantageously realized by selecting different architectural implementation options as described below. Specifically, the proposed radio communication apparatus RCA effectuating at least one locally defined campus network for an industrial environment, e.g. an entire 5G infrastructure, may be realized by aggregating a multiplicity of mobile entities MBE1, MBE2 instead of using only one mobile entity MBE.

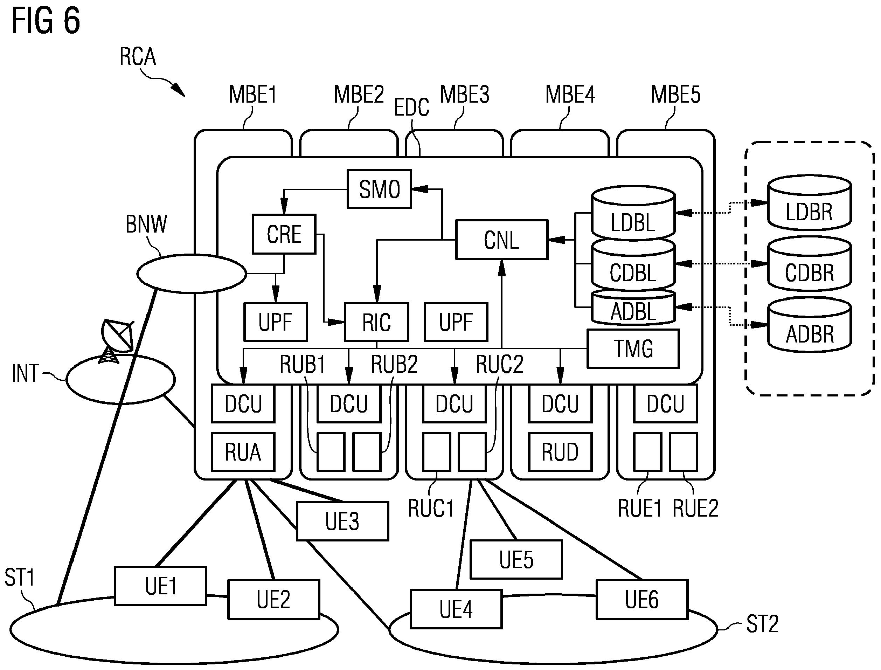

According to the embodiment as described above in connection with FIG. 1, the entire 5G infrastructure may be realized using one mobile entity MBE1, which may serve one or multiple locally defined campus networks within a certain communication range. In a different architectural implementation option as shown in an exemplary embodiment according to FIG. 6, multiple mobile entities MBE1,MBE2,...,MBE5 may collaborate to form an infrastructure edge cloud EDC, where computational applications may be hosted. Correspondingly as for the infrastructure edge cloud EDC of a single mobile entity MBE according to the embodiment as shown in FIG. 1, the collaboratively formed infrastructure edge cloud EDC may connect one or more of the network function nodes CNL, TMG, SMO, RIC, UPF, CRE and/or the local databases or components as described above, in detail the local authorized campus network locations database LDBL, the local campus network configuration database CDBL, the local AAA database ADBL and/or one or more distributed controller units DCU.

The exemplary embodiment according to FIG. 6 may be used or furtherly developed in order to deploy 5G infrastructure components on one or more mobile entities MBE1, MBE2, ..., MBE5. Each or at least some of the mobile entities MBE1, MBE2,..., MBE5 may be equipped with one or more radio units RUA, RUB1, RUB2, RUC1, RUC2, RUD, RUE1, RUE2.

The one or more radio units RUA, ..., RUE2 may provide a radio coverage as needed for operating the one or more campus networks by a fleet of mobile entities MBE1, MBE2, ..., MBE5. The fleet of mobile entities MBE1, MBE2, ..., MBE5 may be used to deploy the 5G infrastructure components on one or many mobile systems. Each of the mobile entities MBE1, MBE2, ..., MBE5 may be equipped with one or many radio units RUA, ... , RUE2 in order to provide a required coverage for the campus networks operated by the fleet of mobile entities MBE1, MBE2,..., MBE5.

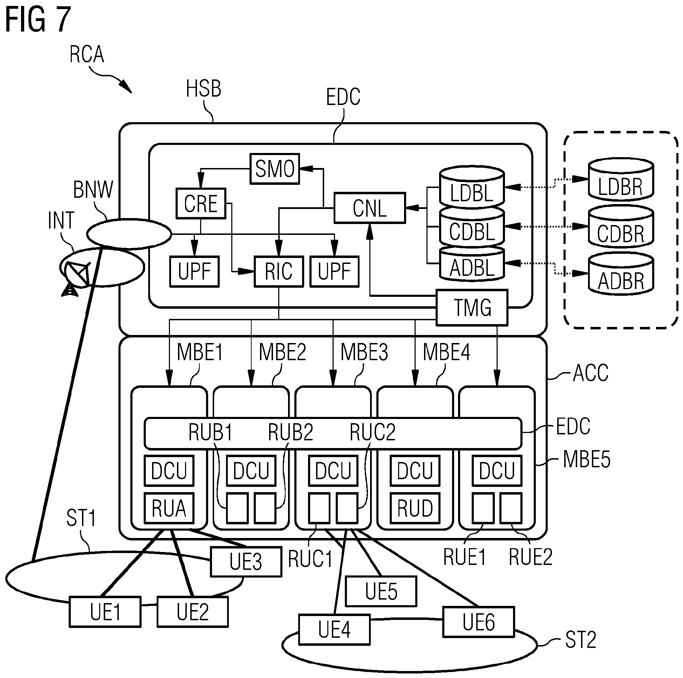

In FIG. 7 a multi-mobile-entities scenario is shown wherein a multiplicity of mobile entities MBE1, MBE2, ..., MBE5 are organized in a hierarchical fashion. In one embodiment, the multiplicity mobile entities MBE1, MBE2, ..., MBE5 may be formed by a multiplicity of satellites MBE1, MBE2, ..., MBE5 .

For instance, a low earth orbit or LEO constellation of satellites MBE1, MBE2, ..., MBE5 may provide an access layer ACC for terrestrial systems. The access layer ACC may host the radio units RUA, RUB1, RUB2, RUC1, RUC2, RUD, RUE1, RUE2 and/or distributed controller units DCU.

The LEO constellation of satellites MBE1, MBE2, ..., MBE5 may be connected to a high-speed communication backbone HSB. The high-speed communication backbone HSB may be formed by a multiplicity of geostationary earth orbit or GEO satellites providing high-speed links, e.g. optical links, between the satellites MBE1, MBE2, ..., MBE5 on the LEO constellation and potentially a high-speed link to the terrestrial backbone network BNW.

Both constellations - the LEO constellation of satellites MBE1, MBE2, ..., MBE5 and the not shown GEO constellation - may realize an infrastructure edge cloud EDC which provide the compute runtimes for the campus network and 5G components. One or both infrastructure edge clouds EDC may additionally host industrial services and/or application components close to the source of communication data.

In summary, the proposed embodiments propose a radio communication apparatus for providing a locally defined campus network for an industrial environment. The radio communication apparatus may comprise one or more mobile entities including at least one radio unit for operating a radio frontend maintaining the campus network.

The proposed embodiments may enhance the present concept of mobility from the access point or endpoint point side to the infrastructure side. This may even involve the infrastructure itself being mobile while the network is operational. In a specific embodiment an infrastructure side mobility may be realized with satellites. The campus network infrastructure - including radio units, core functions such as a 5G core, distributed units or DU, centralized units or CU etc. - may reside in one or more satellites orbiting the globe. As a result of the enhanced mobility provided by the proposed embodiments, campus networks may be dynamically deployed in any area or combination of areas being covered by transmission systems such as satellites.

Advantageously, the proposed embodiments may provide for a deployment of geographically distributed campus networks on demand without having to rely on a local fixed infrastructure.

Advantageously, the proposed embodiments may provide for a realization of campus networks being dynamically generated and matching a predefined set of boundaries, with the option to physically restrict a signal propagation and association of endpoints to a virtual perimeter, geographic boundaries and/or geofence, thereby adding a layer of physical security. The proposed embodiments may, in other words, support geofencing in industrial environments, e.g. by restricting signal propagation in certain areas.

The proposed embodiments may readily take advantage of the flexibility of hardware and software components introduced by future fifth generation or 5G or sixth generation or 6G systems.

The proposed embodiments enhance the present mobility concept leveraging the architectural setup in campus network topologies to involve the infrastructure itself. Deployment of a radio communication apparatus according to the embodiments is possible on both, global systems - such as 6G non-terrestrial networks or satellite systems - and ground based factory setups in large scale and/or in local single sites.

The proposed embodiments provide by design reconfigurability of the campus network while additionally offering improved resilience by seamlessly applying a built-in capability to use handover on the infrastructure side.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A radio communication apparatus for providing at least one locally defined campus network for an industrial environment, the radio communication apparatus comprising:
- a mobile entity including at least one radio unit for operating a radio frontend maintaining the campus network;
- a plurality of network function nodes assigned to a shared infrastructure edge cloud, the mobile entity at least partially contributing computational resources for at least one of said plurality of network function nodes;
- the plurality of network function nodes including a trajectory node for collecting and tracking trajectory data of the mobile entity and a localizer node for using the trajectory data for identifying locations to be covered by the locally defined campus network.

2. A radio communication apparatus according to claim 1, wherein the mobile entity is an autonomously moving entity.

3. A radio communication apparatus according to one of the aforementioned claims, including a network interface for connecting the mobile entity to at least one further mobile entity or to a backbone network.

4. A radio communication apparatus according to one of the aforementioned claims, including a trajectory node for monitoring at least one of a geographical position, a course, an acceleration and a velocity of the mobile entity.

5. A radio communication apparatus according to claim 4, the trajectory node including at least one interface for exchanging data for controlling the course and/or the velocity of the mobile entity.

6. A radio communication apparatus according to one of the aforementioned claims, the localizer node exchanging data related to authentication, authorization, or accounting of the campus network.

7. A radio communication apparatus according to claim 6, the localizer node exchanging configuration artifacts or configuration parameters with a local or a remote database.

8. A radio communication apparatus according to one of the aforementioned claims including at least two mobile entities wirelessly connected via a backbone network.

9. A radio communication apparatus according claim 8, the at least two mobile entities being assigned to at least one of said shared infrastructure edge cloud.

10. A radio communication apparatus according to claim 9, the at least two mobile entities being hierarchically organized.

11. A satellite forming a mobile entity for a radio communication apparatus according to one of the aforementioned claims.

12. An automated guided vehicle forming a mobile entity for a radio communication apparatus according to one of the aforementioned claims.
